# EUROPEAN PATENT APPLICATION

(11) **EP 1 420 336 A2**
(43) Date of publication of application: **19.05.2004**
(21) Application number: 03018839.5
(22) Date of filing: 19.08.2003
(51) Int. Cl.: G06F 3/14

(54) **Information processing apparatus and display switching method**

(30) Priority: 18.11.2002 JP 2002333893
(71) Applicant: Kabushiki Kaisha Toshiba, Tokyo (JP)
(72) Inventor: Yohzoh, Ogura, c/o Intellectual Property Division, Minato-ku, Tokyo 105-8001 (JP)
(74) Representative: Henkel, Feiler & Hänzel

(57) **Abstract**

An information processing apparatus equipped with an interface (142, 143, 144) for connection to an external display device (200) and comprises an internal display device (120), and an operating button (115). The apparatus further comprises processing means (11) responsive to an operation of the operating button (115) for driving a plurality of display devices including the internal display device (120) and the external display device (200).

## Description

The present invention relates to an information processing apparatus equipped with an interface for connection to an external display device and a display switching method.

A conventional method of switching computer display devices involves specifying and making display switching by using a hot key or screen properties (see, for example, Japanese Unexamined Patent Publication No. 7-13531).

With the conventional technique, however, in the case of a simultaneous display mode in which the same image is displayed on two or more display devices, a plurality of actions (input operations) is required both in switching into the simultaneous display mode and in canceling the simultaneous display mode, leading to a problem of operability.

Also, setting a multi-monitor (multi-display) mode which different images are displayed on two or more display devices needs complex select operations and setting operations, such as open screen properties, click a setting tab, select monitor devices, set up the monitor devices, press the OK button, etc. In this case as well, therefore, there arises a problem of operability.

Thus, the conventional methods for setting the simultaneous display mode and the multi-monitor display mode suffer from a problem of operability.

It is an object of the present invention to provide an information processing apparatus and a display device switching method which allow switching into the simultaneous display mode and the multi-monitor display mode to be made easily with a simple operation.

According to an embodiment of the present invention, an information processing apparatus which is equipped with an interface for connection to an external display device and comprises an internal display device, an operating button, and processing means responsive to an operation of the operating button for driving a plurality of display devices including the internal display device and the external display device.

According to another embodiment of the present invention, a display device switching method for use with an information processing apparatus equipped with an interface for connection to an external display device, the method comprises switching from a process of driving plural display devices including the external display device to a process of driving a single display device and vice versa each time an operating button of the information processing apparatus is operated.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram for use in explanation of switching operations and the operating procedure for the simultaneous display mode;
FIG. 2 is a diagram for use in explanation of switching operations and the operating procedure for the multi-monitor display mode;
FIG. 3 is an exterior view of an information processing apparatus according to an embodiment of the present invention;
FIG. 4 is a block diagram of a system configuration of the information processing apparatus of FIG. 3;
FIG. 5 shows an example of a user interface screen of the information processing apparatus of FIG. 3; and
FIG. 6 is a flowchart illustrating the display device switching procedure in the information processing apparatus of FIG. 3.

An embodiment of an information processing apparatus according to the present invention will now be described with reference to the accompanying drawings.

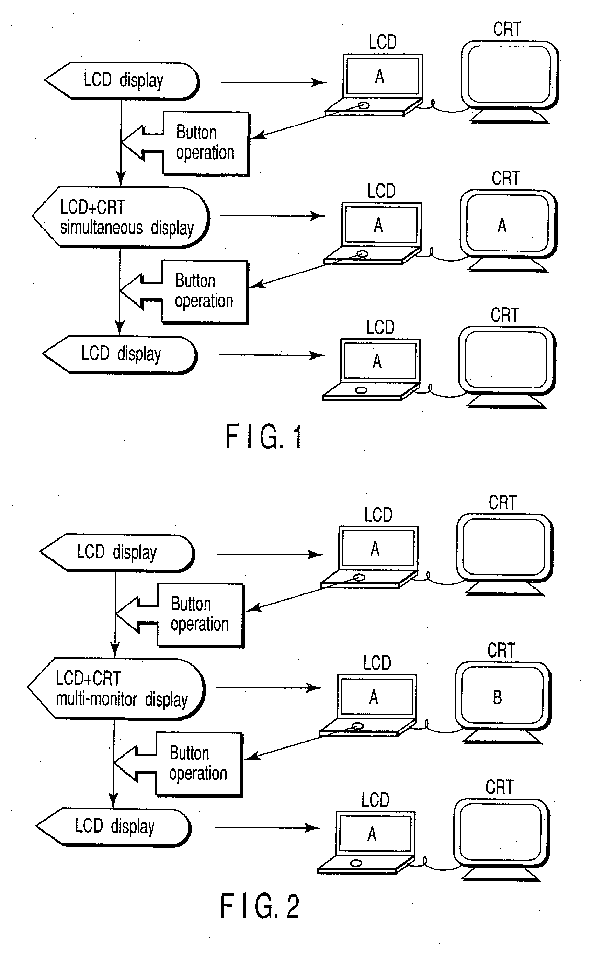

First, an outline of the embodiment of the present invention will be given with reference to FIGS. 1 and 2.

FIGS. 1 and 2 illustrate operating procedures in the embodiment of the present invention. The embodiment will be described in terms of a portable personal computer configured such that the display unit casing can be rotated through a given angle with respect to the keyboard on the body. In the display unit casing an LCD-based display device (hereinafter referred to as an internal display device) is housed. The body of the personal computer is equipped with an interface for connection to an external display device such as a CRT. An operating button (hereinafter referred to as a presentation button) dedicated to switching between the display modes is provided on the top of the computer body on which the keyboard is situated. Although the embodiment is described as using an LCD as the internal display device and a CRT as the external display device, this is not restrictive. For example, it is also possible to connect an LCD-based display device as the external display device through a DVI (Digital Video Interface).

FIG. 1 shows operations and the switching procedure when the presentation button is allocated a function of switching from the sole display mode in which the LCD as the internal display device is solely driven to display an image to the simultaneous display mode in which the same image is displayed on two or more display devices.

One-time depressing (one-touch operation) the presentation button in the sole display mode allows switching into the simultaneous display mode in which the same image is displayed on the LCD and the CRT as the external display device. When the presentation button is depressed again in the simultaneous display mode, a display mode is returned to the sole display mode in which only the LCD as the internal display device is active.

FIG. 2 shows operations and the switching procedure when the presentation button is allocated a function of switching from the sole display mode to the multi-monitor display mode and vice versa.

One-time depressing the presentation button in the sole display mode in which the LCD as the internal display device is solely driven allows switching into the multi-monitor display mode in which the LCD and the CRT as the external display device display different images. When the presentation button is depressed again in the multi-monitor display mode, a display mode is returned to the sole display mode in which only the LCD as the internal display device is active.

Thus, each time the presentation button is depressed, switching is made from the sole display mode to the simultaneous display mode or the multi-monitor display mode and vice versa. By having means for allowing the presentation button to have a function of instructing switching from the sole display mode to the simultaneous display mode or the multi-monitor display mode, the display mode switching function shown in FIG. 1 and the display mode switching function shown in FIG. 2 can be selectively performed. The embodiment of the present invention to be described later is provided with a user interface that allows the allocation of such a function (simultaneous display/multi-monitor display) to the presentation button.

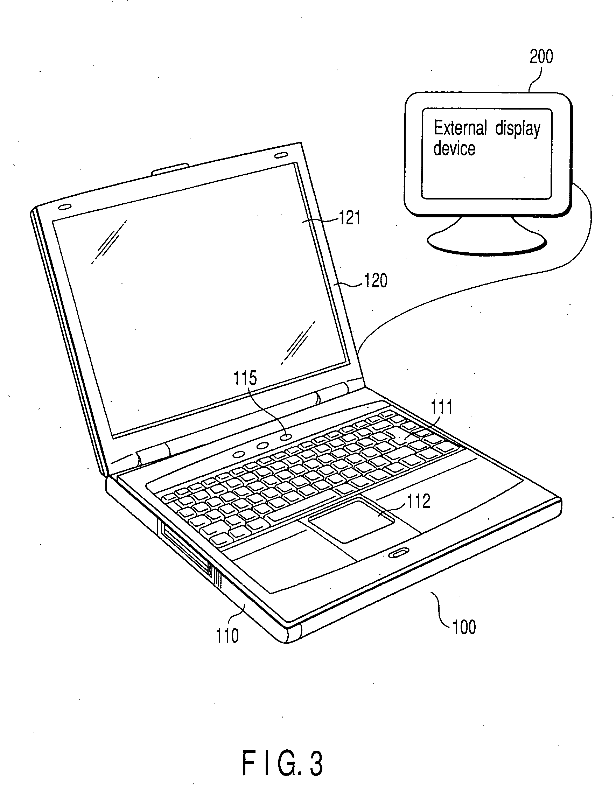

The embodiment of the present invention which implements the display switching function shown in FIGS. 1 and 2 will now be described with reference to FIGS. 3 through 6.

FIG. 3 is a perspective view illustrating the exterior of the information processing apparatus embodying the present invention. The embodiment will be described taking a notebook personal computer by way of example.

A computer, indicated at 100, has a computer body 110 and a display unit (casing) 120. An external display device 200, such as a CRT, may be connected to the computer body 110 through an interface for connection to an external display device which will be described later.

The display unit 120 has an LCD-based display device built in as an internal display device 121. The display unit 120 is mounted on the computer body 110 so as to be rotatable between the open position and the closed position.

The computer body 110 has a housing in the shape of a thin box. The keyboard 111 is placed on the top of that housing. Armrests are formed in front of the keyboard 111 on the top of the housing. A touch panel 112 is provided in substantially the middle between the armrests. An operating button (hereinafter referred to as a presentation button) 115 which is dedicated to instruct switching between display modes is provided on the top of the housing on which the keyboard 111 is situated.

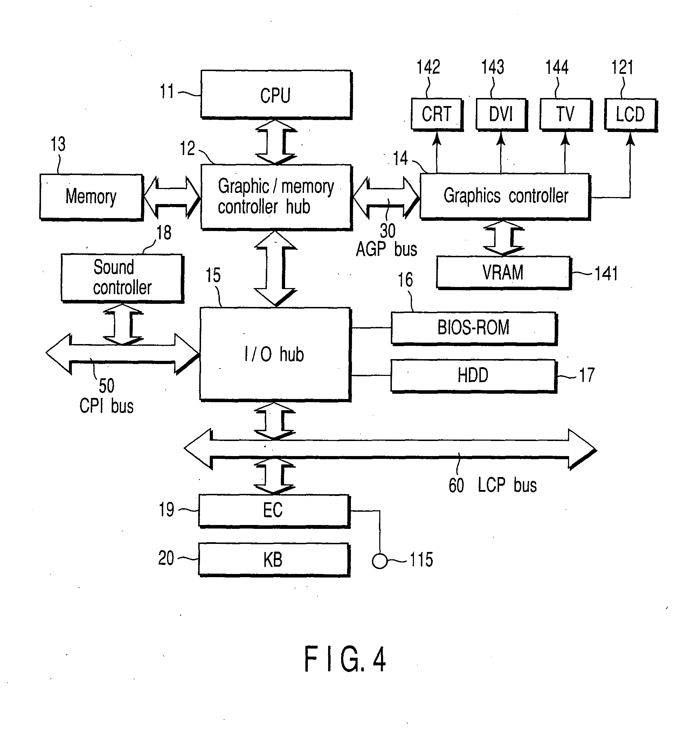

FIG. 4 shows, in block diagram form, the system configuration of the computer shown in FIG. 3. The computer system, which is a battery-driven notebook personal computer easy to carry, includes a CPU 11, a graphic/memory controller hub 12, a memory 13, a graphics controller 14, a VRAM 141, an I/O hub 15, a BIOS-ROM 16, a hard disk driver (HDD) 17, a sound controller 18, an embedded controller (EC) 19, and a keyboard 20.

The graphics controller 14 controls the internal display device (LCD) 121 and external display devices connected to the computer body through interfaces for connection to external display devices, such as a CRT terminal 142, a DVI terminal 143 and a TV (television) terminal 144 under the control of the OS executed by the CPU 11.

The embedded controller (EC) 19 issues a request for display switching to the CPU 11 when the presentation button 115 is depressed.

The CPU 11 carries out various processes according to the operating system (OS), application programs and utility programs loaded from the hard disk drive (HDD) 17 into the main memory 13. In this embodiment, upon reception of the display switching request from the embedded controller (EC) 19, the CPU 11 issues a display switching command to the graphics controller 14 under the control of the OS.

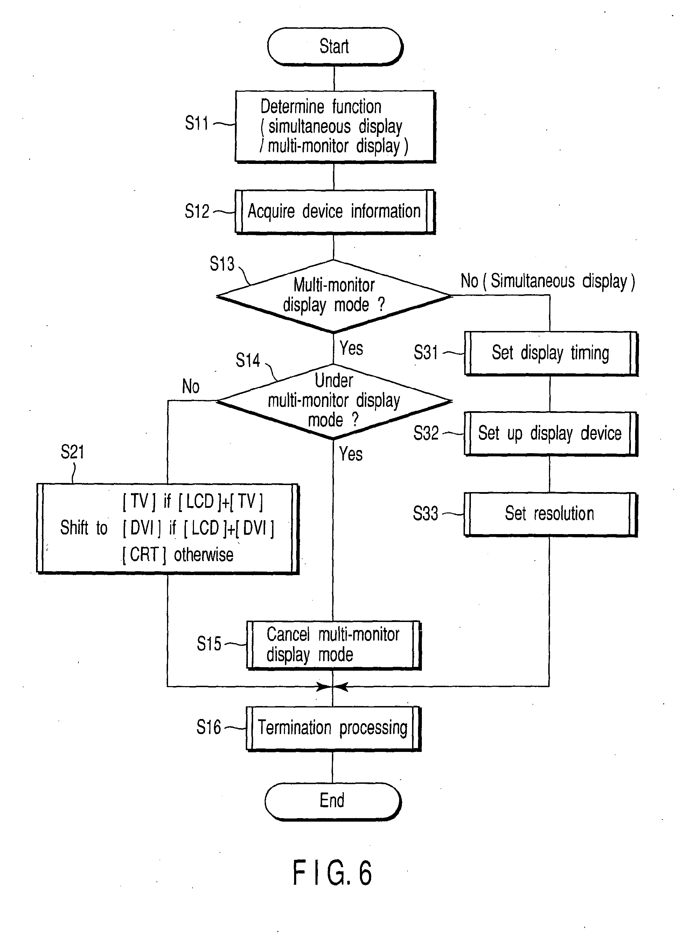

Upon reception of the display switching command from the CPU 11 via the graphic/memory controller hub 12, the embedded controller (EC) 19 executes such processing of switching display modes as shown in FIG. 6.

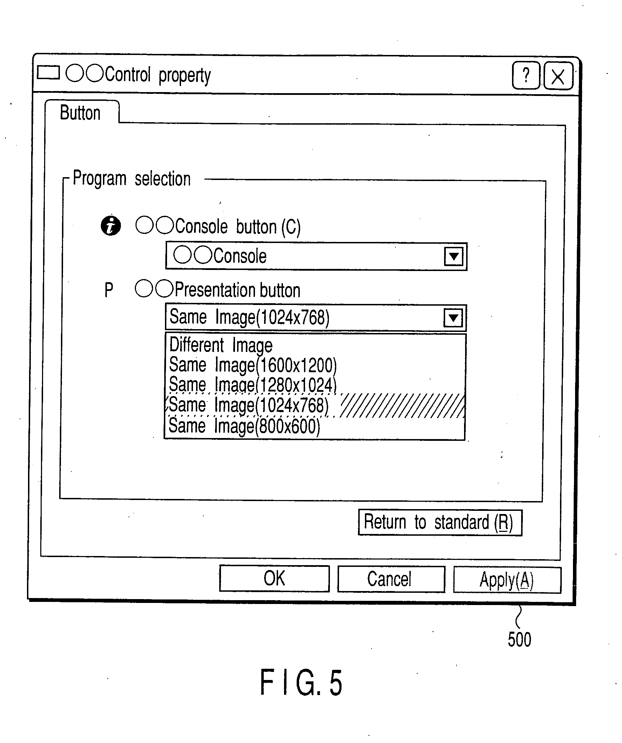

FIG. 5 shows an example of a user interface screen 500 for selecting and setting a function to be allocated to the presentation button 115. Here, a selection is made from four simultaneous display (same image) functions of different resolutions and a multi-monitor (different images) display function and the selected function is allocated to the presentation button 115.

FIG. 6 is a flowchart illustrating the display device switching procedure carried out by the embedded controller (EC) 19 when the presentation button 115 is depressed.

The operation of the embodiment of the present invention will be described with reference to the drawings thus far described.

To the computer body 110 is connected an external display device 200 through an interface (142, 143, 144) for connection to an external display device. Of various external display devices (CRT, LED, television set) which can be connected to the interfaces 142, 143, and 144, the CRT is connected to the computer body 110 through the interface 142 as the external display device 200.

Using the user interface screen shown in FIG. 5, an arbitrary one is selected from the four types of simultaneous display (same image) functions different in resolution and the multi-monitor (different images) display function and then allocated to the presentation button 115 provided on the console panel of the computer body 110. Here, the operation when the button is allocated a simultaneous display function (see FIG. 1) and the operation when the button is allocated the multi-monitor display function (see FIG. 2) will be described.

When the presentation button 115 is one-touch depressed, the embedded controller (EC) 19 presents a request for switching display modes to the CPU 11.

Upon reception of the display switching request from the embedded controller (EC) 19, the CPU 11 issues a display switching command to the graphics controller 14 under the control of the OS.

Upon reception of the display switching command from the CPU 11 via the graphic/memory controller hub 12, the embedded controller (EC) 19 executes such processing of switching display modes as shown in FIG. 6.

When the presentation button 115 is depressed once, property information is first acquired which is used to make a determination of which function has been allocated to the presentation button 115 (step S11). Then, various items of device information required to switch display modes, such as current display device status and display state, are acquired (step S12) and the function (the effective function) allocated to the presentation button 115 is determined on the basis of the property information (step S13).

If the simultaneous display (the same image) function has been allocated to the presentation button 115 (NO in step S13), then various setting operations for the simultaneous display (setting the display timing, setting up a display device which is a candidate for simultaneous display, setting the resolution, etc.) are performed (steps S31, S32 and S33). Thus, the external display device (CRT) 200 is enabled to display the same image as the internal display device (LCD) 121.

If, on the other hand, the presentation button 115 has been allocated the multi-monitor (different images) display function (YES in step S13), then it is determined whether or not the current display mode is the multi-monitor display mode (step S14). If the result is the multi-monitor display mode (YES in step S14), then the multi-monitor display mode is canceled and a display mode is returned to the display mode using the internal display device (LCD) only (step S15). If the current display mode is not the multi-monitor display mode (that is, only the internal display device (LCD) 121 is placed in the display state) (NO in step S14), a currently connected external display device is identified and multi-monitor display control is performed on that display device. Here, as the external display device 200, the CRT display is connected to the interface 142 of the computer body 110 and hence the multi-monitor display control is performed on the CRT display (step S21).

Thus, merely repeating one-touch operation of the presentation button 115 allows switching into the simultaneous display mode or the multi-monitor display mode to be made quickly with a simple operation, significantly improving operability.

While the description above refers to particular embodiments of the present invention, it will be understood that many modifications may be made without departing from the spirit thereof. The accompanying claims are intended to cover such modifications as would fall within the true scope and spirit of the present invention. The presently disclosed embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein.

For example, although the embodiment has been described as using the presentation button 115 both in switching into the simultaneous display mode and in switching into the multi-monitor display mode, a dedicated switching button may be provided for each of the simultaneous display mode and the multi-monitor display mode. Alternatively, a multifunction button and a dedicated button may be used in combination.

## Claims

1. An information processing apparatus equipped with an interface (142, 143, 144) for connection to an external display device (200), the apparatus comprising:
an internal display device (120); and
an operating button (115), **characterized by** further comprising:
processing means (11) responsive to an operation of the operating button (115) for driving a plurality of display devices including the internal display device (120) and the external display device (200).

2. The apparatus according to claim 1, **characterized in that** the processing means (11) alternately performs a simultaneous display process for a plurality of display devices including the external display device (200) and a sole display process for the internal display device (120) each time the operating button (115) is operated.

3. The apparatus according to claim 1, **characterized in that** the processing means (11) alternately performs a multi-monitor display process for the external display device (200) and the internal display device (120) and a display process for a sole display device of either the internal display device (120) or the external display device (200) each time the operating button (115) is operated.

4. The apparatus according to claim 1, **characterized by** further comprising a user interface (500) which allocates either a simultaneous display processing function of allowing the internal display device (120) and the external display device (200) to display the same image or a multi-monitor display processing function of allowing the internal display device (120) and the external display device (200) to display different images to the operating button (115).

5. The apparatus according to claim 4, **characterized in that** the user interface (500) displays a setting screen which allows a user to select one of simultaneous display processing functions for a plurality of types of display devices different in resolution.

6. The apparatus according to claim 1, **characterized in that**, when a simultaneous display processing function is allocated to the operating button (115) by a user interface, the processing means (11) alternately performs a simultaneous display process for a plurality of display devices including the external display device (200) and a sole display process for a single display device including the external display device (200) and the internal display device (120) each time the operating button (115) is operated and, and when a multi-monitor display processing function is allocated to the operating button (115), the processing means (11) alternately performs a multi-monitor display process for a plurality of display devices including the external display device (200) and a sole display process for a single display device including the external display device (200) and the internal display device (120) each time the operating button (115) is operated.

7. The apparatus according to claim 1, **characterized by** further comprising:
a user interface (500) which allocates either a simultaneous display mode or a multi-monitor mode to the operating button (115), and **characterized in that** the processing means (11) alternately performs a display process corresponding to a mode allocated to the operating button (115) by the user interface and a sole mode for a single display device each time the operating button (115) is operated.

8. A display device switching method for use with an information processing apparatus equipped with an'interface (142, 143, 144) for connection to an external display device (200), the method **characterized by** comprising:
switching from a process of driving plural display devices including the external display device (200) to a process of driving a single display device and vice versa each time an operating button (115) of the information processing apparatus is operated.

9. The method according to claim 8, **characterized in that** the process of driving the plural display devices including the external display device (200) comprises a simultaneous display process to display the same image on the plural display devices.

10. The method according to claim 8, **characterized in that** the process of driving the plural display devices including the external display device (200) comprises a multi-monitor display process to display different images on the plural display devices.

11. The method according to claim 8, **characterized in that** the information processing apparatus comprises a user interface (500) which allocates either a simultaneous display mode or a multi-monitor mode to the operating button (115), and when the simultaneous display mode is allocated to the operating button (115) by a user interface, a simultaneous display process for a plurality of display devices including the external display device (200) and a sole display process for a single display device are alternately performed each time the operating button (115) is operated and, when the multi-monitor mode is allocated to the operating button (115), a multi-monitor display process for a plurality of display devices including the external display device (200) and the sole display process are alternately performed each time the operating button (115) is operated.
